# EUROPÄISCHE PATENTSCHRIFT

(11) **EP 1 427 085 B1**
(45) Veröffentlichungstag und Bekanntmachung des Hinweises auf die Patenterteilung: **31.05.2006**
(21) Anmeldenummer: 03104510.7
(22) Anmeldetag: 03.12.2003
(51) Int. Cl.: H02J 7/00

(54) **Ladeverfahren für Akkumulatorenpacks**
Charging method for battery packs
Procédé de charger pour un bloc de batteries secondaires

(30) Priorität: 04.12.2002 DE 10256545
(43) Veröffentlichungstag der Anmeldung: 09.06.2004
(73) Patentinhaber: HILTI Aktiengesellschaft, 9494 Schaan (LI)
(72) Erfinder: Heigl, Bernd, 86199, Augsburg (DE); Ziegler, Bernd, 86856, Hiltenfingen (DE)
(74) Vertreter: Wildi, Roland

(56) Entgegenhaltungen:
- EP-A- 0 450 783
- EP-A- 0 818 869
- EP-A- 1 328 055
- US-A- 5 712 795
- US-B1- 6 483 272

## Beschreibung

Die Erfindung bezeichnet ein Ladeverfahren für Akkumulatorenpacks, insbesondere für NiCd- und NiMH-Akkupacks für Elektrohandwerkzeugmaschinen.

Insbesondere NiCd- und NiMH-Akkupacks für Elektrohandwerkzeugmaschinen müssen in kurzer Zeit nachgeladen werden können, um im Wechsel mit einem weiteren Akkupack eine quasikontinuierliche Nutzung der Elektrohandwerkzeugmaschine zu ermöglichen. Um dennoch eine hinreichende Lebensdauer der NiCd-Akkupacks zu erzielen, müssen akkuspezifische Grenzwerte, insbesondere die Temperatur beim Laden, berücksichtigt werden. Zugeordnete Ladegeräte überwachen üblicherweise die Temperatur des Akkupacks über einen im Akkupack angeordneten Temperatursensor.

Akkupacks bestehen aus einer Vielzahl, zumindest teilweise in Reihe miteinander verschalteter Zellen. Somit fliesst sowohl bei der Nutzung als auch beim Laden durch alle diese Zellen derselbe Strom. Die nutzbare Kapazität eines Akkupacks wird somit durch die Kapazität der schwächsten Zelle bestimmt, welche dadurch auch die Lebensdauer des Akkupacks beschränkt. Zur gezielten Erhöhung der Kapazität, insbesondere der schwächsten Zelle, sollte der Akkupack regelmässig in einem Refreshzyklus regeneriert werden. Derartige Refreshzyklen bestehen üblicherweise aus einzelnen Refreshladezyklen und optionalen Refreshentladezyklen mit einer bezüglich des Ladezyklus vergleichsweise geringen Stromstärke unterhalb 50%.

Nach der EP450783 erfolgt abhängig vom Ladezustand eines Akkus ein, automatisch vom Mikrocontroller im Verbraucher zuschaltbarer, dem Laden mit ca. 700mA nachfolgender Refreshzyklus mit ca. 100mA. Nach der US6191554 erfolgt bei einem manuell zuschaltbaren, vorgeschalteten Refreshzyklus ein doppeltes Laden/Entladen des NiCd-Akkus sowie ein update des im Akku angeordneten Datenspeichers.

Nach der US6154008 erfolgt bei NiCd-Akkupacks für Elektrohandwerkzeugmaschinen nach einem bezüglich 55°C temperaturkontrolliertem Laden von ca. 2h in einem nachfolgenden, über einen Refreshschalter manuell zuschaltbaren, Refreshzyklus über einen Zeitraum von 4 bis 8h bei einem kleinen Refreshstrom ein Überladen. Gerade im rauhen Baugewerbe wird bei einem manuell wählbaren Refreshzyklus oftmals wesentlich zu oft oder zu wenig ein Refresh durchgeführt, wodurch die mögliche Lebensdauer der Akkupacks nicht erreicht wird. Zudem beansprucht der Refreshzyklus zu viel Zeit, um eine quasikontinuierliche Nutzung im Wechsel zu ermöglichen.

Nach der US6483272 ist ein Ladeverfahren für einen Akkupack bekannt, wobei jede der zumindest zwei in Reihe verschalteten Zellen in einem Ladezyklus über einen Ladezeitraum mit einem effektiven Ladestrom durchflossen und in einem zumindest gelegentlich nachfolgenden Refreshzyklus über einen Refreshladezyklus mit einem niedrigeren effektiven Refreshstrom durchflossen wird, wobei der Refreshzyklus nach einer Periode in einer Anzahl der Ladezyklen nachfolgt.

Die Aufgabe der Erfindung besteht in der Realisierung eines Ladeverfahrens für einen Akkupack mit bei kurzen Ladezeiten hinreichender Lebensdauer.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen wird in einem Ladeverfahren für einen Akkupack jede der zumindest zwei in Reihe verschalteten Zellen in einem Ladezyklus über einen Ladezeitraum mit einem effektiven Ladestrom durchflossen und in einem zumindest gelegentlich nachfolgenden Refreshzyklus über einen Refreshladezyklus mit einem niedrigeren effektiven Refreshstrom durchflossen, wobei der Refreshzyklus nach einer Periode in einer Anzahl der Ladezyklen nachfolgt, vorteilhaft nach einer vorbestimmten Periode von 50 Ladezyklen.

Durch den periodisch in einer Anzahl der Ladezyklen nachfolgenden Refreshzyklus erfolgt die, für eine hinreichende Lebensdauer bei kurzen Ladezeiten notwendige, Überladung mit einer vorbestimmten Überladekapazität zur Regenerierung der schwächsten Zelle nutzerunabhängig.

Vorteilhaft wird die Anzahl der Ladezyklen, weiter vorteilhaft zusätzlich der vollständige Abschluss des letzten Refreshzyklus, in einem im Akkupack angeordneten und von einem zugeordneten Ladegerät schreibbaren sowie lesbaren Datenspeicher gespeichert, wodurch der Akkupack seinen Regenerierungstatus selbst beinhaltet.

Vorteilhaft ist der effektive Refreshstrom betragsweise mindestens der halbe einstündige Ladestrom, wodurch bei der Überladung mit einer vorbestimmten Überladekapazität die mit üblichen kleinem effektiven Refreshstrom unnötig langen Refreshzeiten vermieden werden. In Versuchen konnte der für eine hinreichende Lebensdauer gegenüber dem effektiven Refreshstrom dominierende Parameter der Überladekapazität nachgewiesen werden.

Vorteilhaft beträgt der effektive Refreshstrom mindestens Akkunennkapazität / 4h, weiter vorteilhaft Akkunennkapazität/2h, wodurch eine Überladung in kurzer Zeit erfolgen kann.

Vorteilhaft beträgt die Refreshzeit mindestens 20 min und höchstens 0.4 * Akkunennkapazität / Refreshstrom, weiter vorteilhaft 0.2 * Akkunennkapazität / Refreshstrom, wodurch eine mindestens 10%ige Überladekapazität erzielt wird.

Vorteilhaft wird während des Ladezyklus und/oder während des Refreshzyklus die über einen Sensor gemessene Temperatur des Akkupacks von einem Steuermittel überwacht und bei Überschreitung einer Grenztemperatur der effektive Strom vermindert oder unterbrochen, wodurch eine Schädigung der Zellen vermieden wird.

Vorteilhaft beginnt der Refreshzyklus erst nach Unterschreiten einer Refreshstarttemperatur, weiter vorteilhaft von 60°C, wodurch ein im Ladezeitraum überhitzter Akkupack zuvor abkühlen kann.

Vorteilhaft sind innerhalb des Refreszyklus mindestens zwei, weiter vorteilhaft genau drei, zeitlich beabstandete Refreshladezyklen vorhanden, zwischen denen der Akkupack abkühlen kann.

Vorteilhaft wird zumindest ein Refreshladezyklus beim Erreichen einer Refreshmaximaltemperatur, weiter vorteilhaft von 60°C, vorzeitig abgebrochen, wodurch die Refreshzeit verkürzt wird.

Vorteilhaft beginnt ein optionaler weiterer Refreshladezyklus beim Unterschreiten einer Refreshminimaltemperatur, weiter vorteilhaft von 50°C, wodurch die Abfolge der Refreshladezyklen temperaturgesteuert erfolgt.

Vorteilhaft wird der Refreshzyklus in Abhängigkeit von im Datenspeicher des Akkupacks gespeicherten Daten automatisch gestartet, wodurch dieser unabhängig von der Sorgfalt und der subjektiven Einschätzung des Nutzers im objektiven Bedarfsfall aktiviert wird.

Die Erfindung wird bezüglich eines vorteilhaften Ausführungsbeispiels näher erläutert mit einem Flow Chart des Ladeverfahrens.

Nach dem Flow Chart wird in einem Ladeverfahren für einen nicht dargestellten Akkupack in einem Ladezyklus 1 über einen Ladezeitraum mit einem effektiven Ladestrom I_{Charge} durchflossen und in einem zumindest gelegentlich nachfolgenden Refreshzyklus 2 über einen Refreshladezyklus t_{refresh} mit einem niedrigeren effektiven Refreshstrom I_{refresh} durchflossen, wobei der Refreshzyklus 2 nach einer Periode K in der Anzahl M von Ladezyklen 1 nachfolgt. In einem im Akkupack angeordneten und von einem zugeordneten Ladegerät schreibbaren sowie lesbaren, nicht dargestellten Datenspeicher, in welchem zudem weitere Kennwerte wie Ladestrom I_{Charge}, Nennkapazität Cₙₒₘᵢₙₐₗ, etc. gespeichert sind, wird die Anzahl M der Ladezyklen 1, die Periode K sowie zusätzlich ein Flag F für den vollständigen Abschluss des letzten Refreshzyklus 2 am Beginn 3 des Ladezyklus 1 gelesen bzw. am Ende des Ladezyklus 1 bzw. Refreshzyklus 2 entsprechend geändert gespeichert. Der effektive Refreshstrom I_{refresh} ist betragsweise der halbe effektive Ladestrom I_{Charge} und beträgt Akkunennkapazität Cₙₒₘᵢₙₐₗ / 2h. Die Refreshzeit t_{refresh} beträgt 0.2 * Akkunennkapazität Cₙₒₘᵢₙₐₗ / Refreshstrom I_{refresh}. Während des Ladezyklus 1 wird in der Ladekontrollschleife 4 die über einen nicht dargestellten Sensor gemessene Temperatur Tₐₖₖᵤ des Akkupacks von einem nicht dargestellten Mikrocontroller als Steuermittel überwacht und bei Überschreitung einer Grenztemperatur von 65°C oder einer Grenzladezeit von 2h der effektive Ladestrom I_{Charge} unterbrochen. Zuerst wird im Refreszyklus 2 in der Refreshstartkontrollschleife 5 ein Unterschreiten einer Refreshstarttemperatur von 60°C abgewartet. Dann erfolgen, gesteuert durch den Zähler N, genau drei Durchläufe zeitlich beabstandeter Refreshladezyklen 6, welche durch die Referenzladekontrollschleife 7 beim Erreichen einer Refreshmaximaltemperatur von 60°C oder dem Refreshladezyklus t_{refresh} vorzeitig abgebrochen werden. Ein optionaler weiterer Durchlauf beginnt erst beim Unterschreiten einer Refreshminimaltemperatur von 50°C in der Abkühlkontrollschleife 8. Nach Beendigung des Refreshzyklus 2 schliesst sich eine zeitlich unbeschränkte Selbstentladungskompensation 9 mit einem minimalen Erhaltungsstrom an.

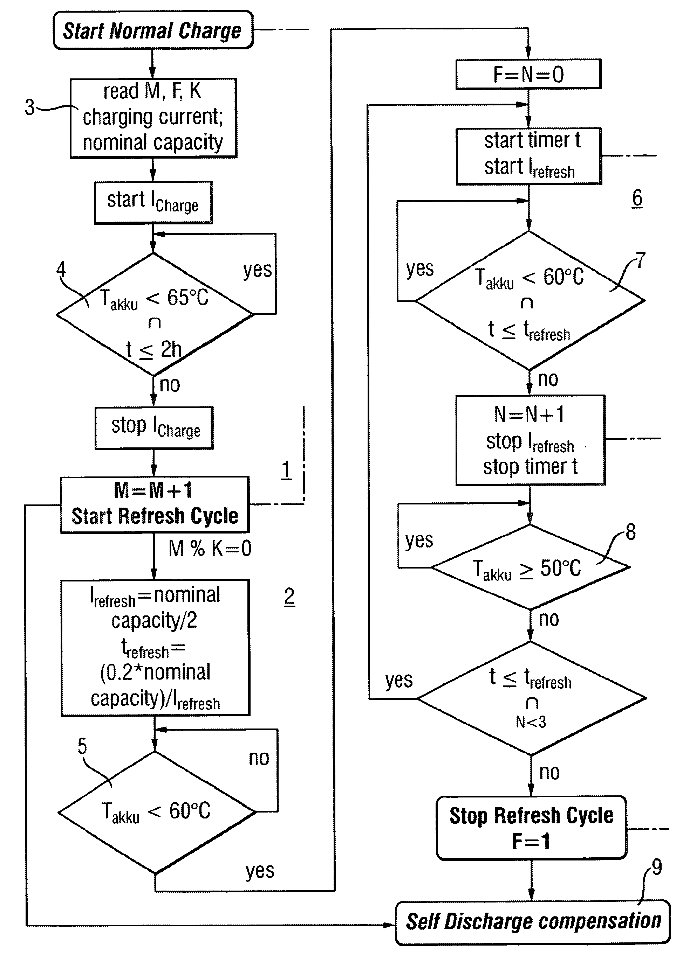

## Patentansprüche

1. Ladeverfahren für einen Akkupack, wobei jede der zumindest zwei in Reihe verschalteten Zellen in einem Ladezyklus (1) über einen Ladezeitraum mit einem effektiven Ladestrom (I_{Charge}) durchflossen und in einem nach einer Periode (K) in einer Anzahl (M) der Ladezyklen (1) dem Ladezyklus nachfolgenden Refreshzyklus (2) mit einem bezüglich des effektiven Ladestroms niedrigeren effektiven Refreshstrom (I_{refresh}) durchflossen wird, durch welchen eine Überladung des Akkupacks erfolgt, wobei der Refreshzyklus (2) wobei im Refreshzyklus (2) die Refreshzeit (t_{refresh}) mindestens 20 min und höchstens 0.4 * Akkunennkapazität (Cₙₒₘᵢₙₐₗ) / Refreshstrom (I_{refresh}), optional höchstens 0.2 * Akkunennkapazität (Cₙₒₘᵢₙₐₗ) / Refreshstrom (I_{refresh}) beträgt.

2. Ladeverfahren nach Anspruch 1, **dadurch gekennzeichnet, dass** im Ladezyklus (1) die Anzahl (M) der Ladezyklen (1), optional zusätzlich ein Flag (F) für den vollständigen Abschluss des letzten Refreshzyklus (2), in einem, im Akkupack angeordneten und von einem zugeordneten Ladegerät schreibbaren sowie lesbaren, Datenspeicher gespeichert wird.

3. Ladeverfahren nach Anspruch 1 oder 2, **dadurch gekennzeichnet, dass** im Refreshzyklus (2) der effektive Refreshstrom (I_{refresh}) mindestens Akkunennkapazität (Cₙₒₘᵢₙₐₗ) / 4h, optional mindestens Akkunennkapazität (Cₙₒₘᵢₙₐₗ) / 2h beträgt.

4. Ladeverfahren nach einem der vorherigen Ansprüche, **dadurch gekennzeichnet, dass** während des Ladezyklus (1) und/oder während des Refreshzyklus (2) die über einen Sensor gemessene Temperatur des Akkupacks (Tₐₖₖᵤ) von einem Steuermittel überwacht und bei Überschreitung einer Grenztemperatur der effektive Strom vermindert oder unterbrochen wird.

5. Ladeverfahren nach einem der vorherigen Ansprüche, **dadurch gekennzeichnet, dass** der Refreshzyklus (2) erst nach Unterschreiten einer Refreshstarttemperatur, optional von 60°C beginnt.

6. Ladeverfahren nach einem der vorherigen Ansprüche, **dadurch gekennzeichnet, dass** innerhalb des Refreszyklus (2) mindestens zwei, optional genau drei, zeitlich beabstandete Refreshladezyklen (6) vorhanden sind.

7. Ladeverfahren nach Anspruch 6, **dadurch gekennzeichnet, dass** zumindest ein Refreshladezyklus (6) beim Erreichen einer Refreshmaximaltemperatur, optional von 60°C, vorzeitig abgebrochen wird.

8. Ladeverfahren nach Anspruch 6 oder 7, **dadurch gekennzeichnet, dass** ein weiterer Refreshladezyklus (6) beim Unterschreiten einer Refreshminimaltemperatur, optional von 50°C beginnt.

9. Ladeverfahren nach einem der vorherigen Ansprüche, **dadurch gekennzeichnet, dass** der Refreshzyklus (2) in Abhängigkeit von im Datenspeicher des Akkupacks gespeicherten Daten (M, F, K, Cₙₒₘᵢₙₐₗ, I_{Charge}) automatisch gestartet wird.

## Claims

1. Charging method for a battery pack, wherein an effective charging current (I_{charge}) is passed through each of at least two cells connected in series in a charging cycle (1) over a charging period, and an effective refresh current (I_{refresh}), which is lower with respect to the effective charging current, is passed through said cells in a refresh cycle (2) which follows the charging cycle after a period (K) in a number (M) of charging cycles (1), whereby overcharging of the battery pack occurs, the refresh time (t_{refresh}) in the refresh cycle (2) lasting for at least 20 minutes and amounting to not more than 0.4 * nominal battery capacity (Cₙₒₘᵢₙₐₗ) / refresh current (I_{refresh}), optionally not more than 0.2 * nominal battery capacity (Cₙₒₘᵢₙₐₗ) / refresh current (I_{refresh}).

2. Charging method according to claim 1, **characterised in that** in the charging cycle (1) the number (M) of charging cycles (1), and optionally additionally a flag (F) for the complete ending of the last refresh cycle (2), is stored in a data memory arranged in the battery pack and writable and readable by an associated charging device.

3. Charging method according to claim 1 or 2, **characterised in that** in the refresh cycle (2) the effective refresh current (l_{refresh}) amounts to at least the nominal battery capacity (Cₙₒₘᵢₙₐₗ) / 4 h, optionally at least the nominal battery capacity (Cₙₒₘᵢₙₐₗ) / 2 h.

4. Charging method according to any one of the preceding claims, **characterised in that** during the charging cycle (1) and/or during the refresh cycle (2) the temperature of the battery pack (Tₐₖₖᵤ) measured via a sensor is monitored by control means and, if a limit temperature is exceeded, the effective current is reduced or interrupted.

5. Charging method according to any one of the preceding claims, **characterised in that** the refresh cycle (2) begins only after the temperature has fallen below a refresh start temperature, optionally of 60°C.

6. Charging method according to any one of the preceding claims, **characterised in that** within the refresh cycle (2) at least two, optionally exactly three, refresh charging cycles (6) spaced apart in time are present.

7. Charging method according to claim 6, **characterised in that** at least one refresh charging cycle (6) is terminated prematurely upon attainment of a maximum refresh temperature, optionally of 60°C.

8. Charging method according to claim 6 or 7, **characterised in that** a further refresh charging cycle (6) begins if the temperature falls below a minimum refresh temperature, optionally of 50°C.

9. Charging method according to any one of the preceding claims, **characterised in that** the refresh cycle (2) is started automatically in dependence on data (M, F, K, Cₙₒₘᵢₙₐₗ, I_{charge}) stored in the data memory of the battery pack.

## Revendications

1. Procédé de charge pour un bloc d'accumulateurs, chacun des éléments, au nombre d'au moins deux, connectés en série étant parcouru dans un cycle de charge (1) pendant un temps de charge par un courant de charge effectif (l_{Charge}) et, après une période (K) dans un nombre (M) de cycles de charge (1), étant parcouru, dans un cycle de régénération (2) suivant le cycle de charge, par un courant de régénération effectif (l_{refresh}) qui est inférieur au courant de charge effectif et qui a pour effet de surcharger le bloc d'accumulateurs, le temps de régénération (t_{refresh}) durant le cycle de régénération (2) étant d'au moins 20 min et d'au plus 0,4 * capacité nominale des accumulateurs (Cₙₒₘᵢₙₐₗ) / courant de régénération (I_{refresh}) optionnellement d'au plus 0,2 * capacité nominale des accumulateurs (Cₙₒₘᵢₙₐₗ) / courant de régénération (I_{refresh}).

2. Procédé de charge selon la revendication 1, **caractérisé en ce que** dans le cycle de charge (1) le nombre (M) de cycles de charge (1), optionnellement en plus un drapeau (F) pour l'achèvement complet du dernier cycle de régénération (2), sont mémorisés dans une mémoire de données qui est disposée dans le bloc d'accumulateurs et qui est inscriptible et lisible par un chargeur associé.

3. Procédé de charge selon la revendication 1 ou 2, **caractérisé en ce que** dans le cycle de régénération (2) le courant de régénération effectif (l_{refresh}) est égal à au moins la capacité nominale des accumulateurs (Cₙₒₘᵢₙₐₗ) / 4 h, optionnellement à au moins la capacité nominale des accumulateurs (Cₙₒₘᵢₙₐₗ) / 2 h.

4. Procédé de charge selon une des revendications précédentes, **caractérisé en ce que** pendant le cycle de charge (1) et/ou pendant le cycle de régénération (2) la température du bloc d'accumulateurs (Tₐₖₖᵤ) mesurée par un capteur est surveillée par un moyen de commande et, en cas de surpassement d'une température limite, le courant effectif est réduit ou interrompu.

5. Procédé de charge selon une des revendications précédentes, **caractérisé en ce que** le cycle de régénération (2) ne commence qu'après soupassement d'une température de démarrage de régénération, optionnellement de 60 C.

6. Procédé de charge selon une des revendications précédentes, **caractérisé en ce qu'**à l'intérieur du cycle de régénération (2) sont prévus au moins deux, optionnellement exactement trois, cycles de charge de régénération (6) espacés dans le temps.

7. Procédé de charge selon la revendication 6, **caractérisé en ce qu'**au moins un cycle de charge de régénération (6) est interrompu prématurément à l'atteinte d'une température maximale de régénération, optionnellement de 60 C.

8. Procédé de charge selon la revendication 6 ou 7, **caractérisé en ce qu'**un autre cycle de charge de régénération (6) commence en cas de soupassement d'une température minimale d'entretien, optionnellement de 50°C.

9. Procédé de charge selon une des revendications précédentes, **caractérisé en ce que** le cycle de régénération (2) est lancé automatiquement en fonction de données (M, F, K, Cₙₒₘᵢₙₐₗ, l_{Charge}) enregistrées dans la mémoire de données du bloc d'accumulateurs.
